# EUROPÄISCHE PATENTANMELDUNG

(11) **EP 4 597 699 A1**
(43) Veröffentlichungstag der Anmeldung: **06.08.2025**
(21) Anmeldenummer: 25151366.9
(22) Anmeldetag: 10.01.2025
(51) Int. Cl.: H01M 50/202, H01M 50/224, H01M 50/242, H01M 50/276, H01M 50/342

(54) **BATTERIEZELLENGEHÄUSE SOWIE BATTERIEZELLE**

(30) Priorität: 30.01.2024 DE 102024102642
(71) Anmelder: HOERBIGER Antriebstechnik Holding GmbH, 86956 Schongau (DE)
(72) Erfinder: Reumüller, Christian, 86956 Schongau (DE)
(74) Vertreter: Prinz & Partner mbB

(57) **Zusammenfassung**

Es wird ein Batteriezellengehäuse (10) für eine prismatische Batteriezelle (12) mit einem Gehäusemantel (14) und einem als separates Teil ausgeführten Gehäuseboden (16) gezeigt. In den Gehäuseboden (16) ist ein Druckausgleichselement (30) integriert, das durch zumindest einen Bereich definiert ist, dessen Materialdicke gegenüber einem unmittelbar an ihn angrenzenden Bereich reduziert ist. Dabei bestehen der Gehäusemantel (14) und der Gehäuseboden (16) aus unterschiedlichen Materialien und unterscheiden sich in ihrer Wandstärke.

Des Weiteren wird eine Batteriezelle (12) gezeigt.

## Beschreibung

Die Erfindung betrifft ein Batteriezellengehäuse für eine prismatische Batteriezelle sowie eine solche prismatische Batteriezelle.

Vor allem in der Automobilindustrie kommen prismatische Batteriezellen als Bestandteile von Hochvolt-Energiespeichern für Elektro- oder Hybridfahrzeuge zum Einsatz. Üblicherweise weisen solche prismatischen Batteriezellen einen einseitig offenen Batteriezellengehäusemantel auf, welcher durch einen Deckel mit zwei Polen verschlossen wird. Dabei ist das Batteriezellengehäuse quaderförmig, wodurch prismatische Batteriezellen platzsparend verbaut werden können. Prinzipiell ist das Batteriezellengehäuse aus Metall oder einer Metalllegierung gefertigt, sodass insbesondere die benötigte mechanische Festigkeit, Dichtheit und thermischen Anforderungen erfüllt sind.

Im Falle eines Defekts oder gar eines Brandes in einer Batteriezelle kommt es zu Überdrücken in der Batteriezelle sowie des gesamten Hochvolt-Energiespeichers. Auslöser für eine solche Situation kann beispielsweise eine Überhitzung der Batteriezelle durch Überlastung, ein Kurzschluss oder eine Überladung sein.

Um in solchen kritischen Situationen ein unkontrolliertes Austreten von Chemikalien und/oder Flammen zu verhindern, muss es rechtzeitig zu einem Druckausgleich kommen. Für den Druckausgleich werden üblicherweise Ventile oder Berstelemente als Druckausgleichselemente in dem Batteriezellengehäuse verbaut. Dabei werden Berstelemente Ventilen aus Platz- und Kostengründen vorgezogen.

Bislang wurden die Batteriezellengehäuse für prismatische Batteriezellen durch Fließpressen, Stangenpressen, Biegen, Schweißen und/oder Rollumformen hergestellt. Dabei handelt es sich bei dem Biegen und Schweißen um die wirtschaftlich bevorzugten Verfahren. Allerdings kann es notwendig sein, das Berstelement aus einem anderen Material als den Rest des Zellgehäuses herzustellen, sodass das Berstelement in einem weiteren Schritt in das Zellgehäuse eingefügt werden muss. Prinzipiell ist ein direktes Integrieren des Berstelements mit den aktuellen Herstellverfahren sehr aufwendig und teuer.

Dementsprechend ist es eine Aufgabe der Erfindung, ein Batteriezellengehäuse bereitzustellen, welches einfach und schnell herzustellen ist und somit die Produktionskosten senkt und weiterhin alle Sicherheitsstandards erfüllt.

Erfindungsgemäß wird diese Aufgabe gelöst durch ein Batteriezellengehäuse für eine prismatische Batteriezelle mit einem Gehäusemantel und einem als separates Teil ausgeführten, eine offene Seite des Gehäusemantels schließenden Gehäuseboden. In den Gehäuseboden ist ein Druckausgleichselement integriert, das durch zumindest einen Bereich definiert ist, dessen Materialdicke gegenüber einem unmittelbar an ihn angrenzenden Bereich reduziert ist. Dabei bestehen der Gehäusemantel und der Gehäuseboden aus unterschiedlichen Materialien, d.h. das Material des Gehäusemantel ist ein anderes Material als das des Gehäuseboden, insbesondere bestehen Gehäusemantel und Gehäuseboden aus unterschiedlichen Metalllegierungen, und unterscheiden sich in ihrer Wandstärke. In anderen Worten, dadurch, dass es sich bei dem Gehäusemantel und dem Gehäuseboden um verschiedene Teile handelt, die separat voneinander gefertigt werden, entsteht ein hybrides, zweiteiliges Batteriezellengehäuse. Dabei kann das Druckausgleichselement direkt in den Gehäuseboden integriert werden, ohne die Produktionskosten maßgeblich zu erhöhen oder den Herstellungsprozess zu erschweren. Somit ist es möglich, den Gehäusemantel und den Gehäuseboden unabhängig voneinander herzustellen, sodass die jeweiligen Anforderungen an die Bestandteile des Batteriezellgehäuses einfacher und günstiger realisiert werden können.

Der Gehäusemantel und der Gehäuseboden sind insbesondere aus gängigen Metallwerkstoffen, beispielsweise Metalllegierungen, gefertigt, welche als Coil, das heißt als ein auf einer Spule aufgewickeltes Metallband, zur Verfügung stehen. Dabei wird für die Herstellung des Gehäusemantels vorzugsweise ein Endlosrohr durch Walzprofilieren, insbesondere durch Rollumformen, gefertigt, während für die Herstellung des Gehäusebodens lediglich ein Endlosprofil benötigt wird. Somit kann das Batteriezellengehäuse schnell, einfach und günstig hergestellt werden. Dadurch, dass der Gehäuseboden nicht aus dem Material des Gehäusemantels besteht kann es optimal an die notwendigen Eigenschaften, die an das Druckausgleichselement gestellt werden, angepasst werden.

Unter einem Batteriezellengehäuse ist erfindungsgemäß ein Gehäuse für eine einzelne Batteriezelle zu verstehen. Bei eine prismatische Batteriezelle handelt es sich bei dem Batteriezellengehäuse also um das die gestapelten Anoden- und Kathodenpaketen, welche auch Zell-Stacks genannt werden, umgebende Zellengehäuse.

Bei dem erfindungsgemäßen Druckausgleichselement handelt es sich insbesondere um ein Berstelement. Neben den bereits erwähnten räumlichen Vorteilen eines Berstelements, sind Berstelemente außerdem aus den folgenden Gründen einem Druckausgleichsventil als Druckausgleichselement vorzuziehen. Eine Berstmembran birst bei Überschreiten eines Grenzwertes und gibt somit schnell und einfach einen maximalen Durchflussquerschnitt frei, um den Druck auszugleichen. Außerdem kommt es bei einem Berstelement nicht zu einem ungewollten Entweichen eines Fluides.

Gemäß einer Ausführungsform ist das Druckausgleichselement durch zumindest eine Schwächungslinie definiert oder weist wenigstens eine Schwächungslinie auf. Dabei ist die Schwächungslinie insbesondere U- oder C-förmig ausgeführt. Alternativ können auch sternförmige Schwächungslinien vorgesehen sein. Die Schwächungslinien definieren Sollbruchstellen, sodass der Gehäuseboden entlang der Schwächungslinien birst, wenn der Druck in der Batteriezelle einen durch das Druckausgleichselement definierten Grenzwert überschreitet.

Durch die Anordnung der Schwächungslinie beziehungsweise der Schwächungslinien in dem Gehäuseboden kann außerdem eine vorteilhafte Strömung hervorgerufen werden, sodass der Druck möglichst schnell ausgeglichen wird. Zusätzlich ist es durch die Schwächungslinien möglich, ohne große Verzögerungen den maximalen Strömungsquerschnitt bereitzustellen.

Die Schwächungslinie kann eine Nut sein, insbesondere eine von der Außenseite des Batteriezellengehäuses ausgehende Nut. Somit kann die Schwächungslinie einfach, schnell und günstig hergestellt werden.

Vorteilhafterweise ist die Nut dabei in den Gehäuseboden eingeprägt und weist einen U- oder V-förmigen Querschnitt auf.

Gemäß einer bevorzugten Ausführungsform ist das Druckausgleichselement durch einen vertieften, flachen Abschnitt im Gehäuseboden definiert. Die Wandstärke dieses Abschnitts ist geringer als die Wandstärke des übrigen Gehäusebodens. Insbesondere ist die Wandstärke des vertieften, flachen Abschnitts 25 bis 80 %, bevorzugt 25 bis 50%, kleiner als die Wandstärke des übrigen Gehäusebodens außerhalb des Druckausgleichselements. In anderen Worten, der vertiefte, flache Abschnitt im Gehäuseboden des Druckausgleichselements entspricht einer Berstmembran, welche aufreißt, wenn der Druck innerhalb der Batteriezelle einen Grenzwert überschreitet. Somit kann ein definierter Fluidstrom für den Druckausgleich sichergestellt werden, was einen schnellen und effektiven Druckausgleich erleichtert.

Vorzugsweise weist der das Druckausgleichselement bildende vertiefte, flache Abschnitt wenigstens abschnittsweise an seinem Randabschnitt die Schwächungslinie auf. Somit birst das Druckausgleichselement insbesondere entlang der Schwächungslinie, wobei der vertiefte, flache Abschnitt vorab von dem Druck nach außen gebogen werden kann, sodass ein maximaler Strömungsquerschnitt freigegeben wird. Durch den Dickenunterschied bleibt der Bereich außerhalb des vertieften Abschnitts wie gewünscht bei Druckanstieg stabil. Auch können durch diese Maßnahme die Spannungen in der Schwächungslinie erhöht werden, so dass der Aufreißprozess genau vorbestimmbar ist.

Die Schwächungslinie verläuft vorzugsweise C- oder U-förmig entlang des Randabschnitts des vertieften, flachen Abschnitts. Dadurch kann sichergestellt werden, dass der vertiefte, flache Abschnitt, der vom C oder U umrahmt ist, nach dem Aufreißen weiterhin fest mit dem Gehäuseboden verbunden ist und sich auch bei einem Bersten entlang der Schwächungslinie nicht von dem Gehäuseboden löst.

Gemäß einer Ausführungsform ist der Gehäusemantel ein U-förmiges Profil, dessen offene Seite von dem Gehäuseboden verschlossen wird.

Der Gehäusemantel und der Gehäuseboden können ein beidseitig an den Stirnseiten offenes Batteriezellengehäuse definieren, wobei die offenen Stirnseiten von jeweils einem Deckel mit einem Pol verschlossen werden können. Dabei kann das Batteriezellengehäuse länger als das klassische prismatische Zellgehäuse sein.

Gemäß einer bevorzugten Ausführungsform hat der Gehäusemantel eine kleinere Wandstärke als der Gehäuseboden. Dabei ist insbesondere die größte Wandstärke des Gehäusebodens doppelt bis viermal so groß wie die größte Wandstärke des Gehäusemantels.

Vorzugsweise beträgt die Wandstärke des Gehäusemantels zwischen 0,2 mm und 2 mm, während die Wandstärke des Gehäusebodens außerhalb der Schwächungslinie und des gegebenenfalls vorhandenen vertieften Bereichs zwischen 0,4 mm und 4 mm beträgt.

Das Druckausgleichselement kann eine Fläche von 10 bis 30 % der Gesamtfläche der Außenseite des Gehäusebodens einnehmen. Insbesondere nimmt die Fläche des Druckausgleichselements wenigstens 20 mm² und höchstens 4.000 mm² ein. Somit kann ein schneller, effektiver und definierter Druckausgleich in kritischen Situationen gewährleistet werden.

Gemäß einer Ausführungsform ist das Druckausgleichselement dazu ausgelegt, einem Druck von zumindest 2 bar standzuhalten. Das heißt, der Grenzwert für den Druck innerhalb der Batteriezelle liegt bei mindestens 2 bar. Bevorzugt liegt der Grenzwert zwischen 2 und 25 bar. Dabei ist es wichtig, dass das Druckausgleichselement bis zu 90 % des Grenzwerts dauerhaft standhalten kann, um eine ungewollte Druckentlastung zu verhindern. Bereits durch den normalen Betrieb kann es zu Last- und Temperaturschwankungen in der Batteriezelle kommen, welche normale Druckschwankungen hervorrufen. Für diese normalen Druckschwankungen ist jedoch keinen Ausgleich durch das Druckausgleichselement notwendig. Durch einen hohen Grenzwertdruck kann also eine Schädigung des Druckausgleichselements durch Druckschwankungen des normalen Betriebs verhindert werden.

Um solche Druckschwankungen des normalen Betriebs noch effektiver ausgleichen zu können, kann das Druckausgleichselement zusätzlich zu der Berstmembran, d.h. dem vertieften, flachen Abschnitt, mit einer Ausgleichsmembran kombiniert werden.

Gemäß einer Ausführungsform ist der Gehäuseboden ein Flachprofil, welches an seinen entgegengesetzten Längsseiten mit dem Rand des Gehäusemantels verbunden ist. Dabei sind der Gehäusemantel und der Gehäuseboden insbesondere so verbunden, dass sie in Verbindung mit den Deckeln für die offenen Stirnseiten ein hermetisches Batteriezellengehäuse bereitstellen. Bei der Verbindung zwischen dem Gehäuseboden und dem Gehäusemantel handelt es sich insbesondere um eine irreversible Verbindung, welche durch ein stoffschlüssiges Fügeverfahren entsteht. Dazu zählen beispielsweise Laserschweißen, Rührreibschweißen, etc.

Der Gehäuseboden kann insbesondere aus einem anderen Metall oder einer anderen Metalllegierung als der Gehäusemantel bestehen, wobei der Gehäuseboden und der Gehäusemantel insbesondere miteinander verschweißt sind. Somit kann trotz der hybriden, zweiteiligen Ausführung ein hermetisches Batteriezellengehäuse bereitgestellt werden.

Gemäß einer bevorzugten Ausführungsform hat der Gehäuseboden am Außenrand einen Absatz, in dem der Rand des Gehäusemantels sitzt. Da der Gehäusemantel und der Gehäuseboden durch den Absatz einen Formschluss bilden, wird das Zentrieren des Gehäusemantels erleichtert, sodass der Herstellungsprozess beschleunigt werden kann.

Vorzugsweise ist der Gehäuseboden ein einstückiger Körper, wobei das Druckausgleichselement einstückig und ungeschweißt in den angrenzenden Bereich des Gehäusebodens übergeht. In anderen Worten, das Druckausgleichselement ist direkt in den Gehäuseboden integriert, wodurch ein ungewolltes Lösen einer Schweißnaht zwischen dem Druckausgleichselement und dem Gehäuseboden verhindert werden kann. Dementsprechend stellt eine solche einstückige Ausführungsform ein stabileres und dichtes Batteriezellengehäuse zur Verfügung.

Des Weiteren wird die Aufgabe erfindungsgemäß gelöst durch eine Batteriezelle mit einem vorhergehend beschriebenen Batteriezellengehäuse, wobei zumindest eine Anode und wenigstens eine Kathode in dem Batteriezellengehäuse untergebracht sind.

Weitere Vorteile und Merkmale der Erfindung ergeben sich aus der nachfolgenden Beschreibung und aus den Zeichnungen, auf die Bezug genommen wird. In den Zeichnungen zeigen:
- Figur 1 eine schematische Perspektivdarstellung einer erfindungsgemäßen Batteriezelle mit ihrem erfindungsgemäßen Batteriezellengehäuses;
- Figur 2 einen Querschnitt des in Figur 1 gezeigten Batteriezellengehäuses;
- Figur 3 einen Querschnitt des Gehäusebodens des Batteriezellengehäuses entlang der Schnittlinie A-A in Figur 1; und
- Figur 4 eine schematische Darstellung einer erfindungsgemäßen Batteriezelle im aufgeschnittenen Zustand.

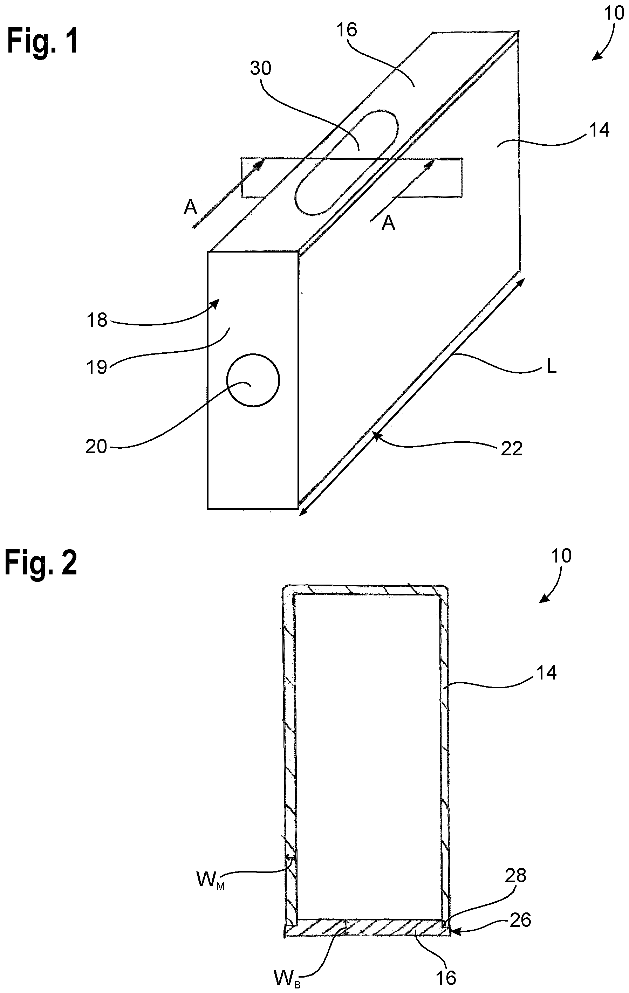

In Figur 1 ist eine prismatische, hier quaderförmige Batteriezelle 12 mit einem Batteriezellengehäuse 10 zu sehen. Die Batteriezelle 12 ist insbesondere für eine Anwendung in der Automobilindustrie vorgesehen.

Das in Figur 1 zu sehende Batteriezellengehäuse 10 besteht u.a. aus einem im Querschnitt U-förmigen Gehäusemantel 14 und einem als separates Teil ausgeführten Gehäuseboden 16, der die offene Seite des U und damit das Profil in Umfangsrichtung schließt. Dabei sind in der hier gezeigten Ausführungsform die beiden Stirnseiten 18 des Batteriezellengehäuses 10 weder durch den Gehäusemantel 14 noch durch den Gehäuseboden 16 gebildet.

Die Stirnseiten 18 werden vielmehr in der gezeigten, optionalen Variante von jeweils einem Deckel 19 mit einem Pol 20 der Batteriezelle 12 abgedeckt und geschlossen.

Alternativ kann auch ein Deckel 19 mit zwei Polen 20 vorgesehen sein oder aber die Pole 20 können in dem Gehäuseboden 16 integriert sein. Wichtig ist lediglich, dass das Batteriezellengehäuse 10 zusammen mit den Deckeln 19 beziehungsweise dem Deckel 19 ein hermetisch dichtes Batteriezellengehäuse 10 bilden.

Der Gehäusemantel 14 ist, wie erläutert, als ein U-förmiges Profil ausgebildet.

Das U-förmige Profil des Gehäusemantels 14 wird vorzugsweise durch ein Walzprofilieren, insbesondere ein Rollumformen eines Coils gefertigt. Dabei handelt es sich bei dem Coil um ein auf einer Spule aufgewickeltes Metallband.

Durch die Fertigung des Gehäusemantels 14 von einem Coil kann der Gehäusemantel 14 als Endlosprofil gefertigt und anschließend auf die gewünschte Länge L des Gehäusemantels 14 zugeschnitten werden.

Der Gehäuseboden 16 ist ein Flachprofil, welches ebenfalls aus einem Coil gefertigt wird. Insbesondere wird aus dem Coil ein Endlosprofil gefertigt, welches ebenso wie zuvor für den Gehäusemantel 14 ausgeführt wurde und auf die gewünschte Länge L zugeschnitten wird.

Da der Gehäusemantel 14 und der Gehäuseboden 16 von verschiedene Coils als separate Teile unabhängig voneinander gefertigt werde, kann der Gehäusemantel 14 aus einem anderen Material als der Gehäuseboden 16 gefertigt sein.

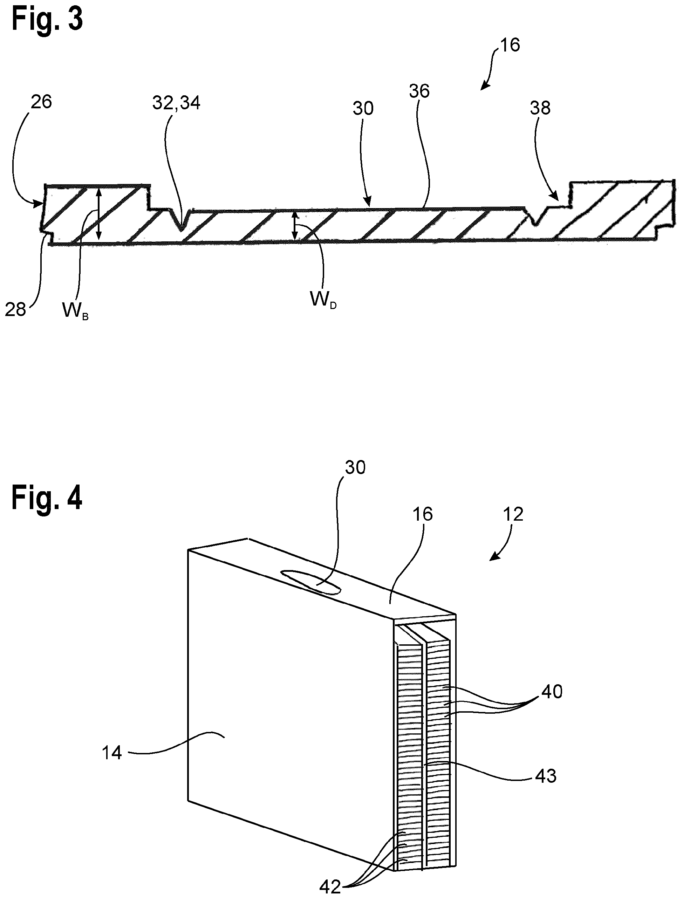

Um den Gehäusemantel 14 und den Gehäuseboden 16 leichter miteinander verbinden zu können, weist der Gehäuseboden 16 entlang seines Außenrandes 26 einen Absatz 28 auf (siehe Figur 3), in dem der Rand 24 des Gehäusemantels 14 sitzt bzw. aufliegt.

Dieser Absatz kann beim Profilieren des Gehäusebodens entstehen.

Zum Verschließen des Gehäusemantels 14 wird je ein Rand 24 eines Schenkels des U an der offenen Seite des Gehäusemantels 14 in den Absatz 28 an den entgegengesetzte Längsseiten 22 des Gehäusebodens 16 eingesetzt.

Da sowohl der Gehäusemantel 14 als auch der Gehäuseboden 16 aus Metallmaterialien bestehen, insbesondere Reinmetallen oder Metalllegierungen, können der Gehäusemantel 14 und der Gehäuseboden 16 vorzugsweise miteinander verschweißt werden. Dabei werden der Gehäusemantel 14 und der Gehäuseboden 16 bevorzugt durch Laserschweißen oder Rührreibschweißen irreversibel miteinander verbunden. Alternativ können auch andere stoffschlüssige Fügeverfahren oder weitere gängige Befestigungsmethoden zur Adhäsion oder Kohäsion verwendet werden.

In Figur 2 ist gut zu erkennen, dass die Wandstärke W_{M} des Gehäusemantels 14 kleiner ist als die Wandstärke W_{B} des Gehäusebodens 16. Dabei ist die größte Wandstärke W_{B} des Gehäusebodens 16 vorzugsweise doppelt bis viermal so groß wie die größte Wandstärke W_{M} des Gehäusemantels 14.

Die Wandstärke W_{M} des Gehäusemantels 14 ist vorzugsweise konstant.

Prinzipiell kann der Gehäusemantel 14 eine Wandstärke W_{M} zwischen 0,2 mm und 2 mm haben. Der Gehäuseboden 16 weist dagegen eine größte Wandstärke W_{B} auf, welche zwischen 0,4 mm und 4 mm groß ist, wobei, wie erläutert, W_{B} >W_{M} ist.

Der Unterschied in der Wandstärke W_{M} des Gehäusemantels 14 und der Wandstärke W_{B} des Gehäusebodens 16 wird unter anderem für die Stabilität des Batteriezellengehäuses 10 benötigt. Hinzu kommt, dass die Verwendung unterschiedlicher Materialien für den Gehäusemantel 14 und den Gehäuseboden 16 unterschiedliche Wandstärken W_{M}, W_{B} zur Folge haben kann.

In dem Gehäuseboden 16 ist außerdem ein Druckausgleichselement 30 in Form eines vertieften, flachen Abschnitts 36 im Gehäuseboden 16 integriert, dessen Materialdicke W_{D} gegenüber der Wandstärke W_{B} des übrigen Gehäusebodens 16 reduziert ist. Dies ist in Figur 3 zu sehen.

Das Druckausgleichselement 30 hat zumindest eine Schwächungslinie 32, die hier (optional) etwas vom Rand des vertieften Abschnitts 36 entfernt längs des Randes verläuft. Die Schwächungslinie 32 definiert dabei eine Sollbruchstelle, entlang der das Druckausgleichselement 30 in einer kritischen Situation aufbricht, um einen schnellen und effektiven Druckausgleich zu ermöglichen.

Dabei ist die Schwächungslinie 32 insbesondere als eine Nut 34 ausgebildet, die von der Außenseite des Batteriezellengehäuses 10 in den Gehäuseboden 16 eingeprägt ist, siehe Figur 3. Nut 34 ist mit einem V-förmigen Querschnitt ausgeführt. Alternativ kann die Schwächungslinie 32 auch U- oder rechteckförmigen Querschnitt aufweisen.

Die Wandstärke W_{D} des vertieften, flachen Abschnitts 36 ist insbesondere 25 bis 50 % kleiner als die Wandstärke W_{B} des restlichen Gehäusebodens 16.

Der vertiefte, flache Abschnitt 36 definiert somit eine Berstmembran, welche bei einem Druck im Inneren der Batteriezelle 12, welcher einen vorgegebenen Grenzwert überschreitet, birst, sodass ein maximaler Durchflussquerschnitt für den Druckausgleich freigegeben wird. Dieser Grenzwert wird auch als Ansprechdruck bezeichnet.

Allerdings darf der vertiefte, flache Abschnitt 36 nicht mit einer zu dünnen Wandstärke W_{D} ausgeführt werden, da es durch den normalen Betrieb der Batteriezelle 12 bereits zu Last- und Temperaturwechseln kommt, welche Druckschwankungen verursachen. Um die Druckschwankung des normalen Betriebs besser ausgleichen zu können, kann das Druckausgleichselement 30 zusätzlich eine Ausgleichsmembran umfassen, welche hier aus Übersichtsgründen nicht gezeigt ist.

Der Grenzwert, bei dessen Überschreitung das Druckausgleichselement 30 angesprochen wird, liegt zwischen 2 und 25 bar. Somit muss das Druckausgleichselement 30 einem Druck von zumindest 2 bar standhalten können.

Um ein ungewolltes Aktivieren des Druckausgleichselements 30 zu verhindern, ist das Druckausgleichselement 30 vorzugsweise so ausgelegt, dass es dauerhaft einem Druck im Inneren der Batteriezelle 12 standhalten kann, welcher 90 % des Grenzwerts, d.h., welcher 90% des Ansprechdrucks, beträgt.

Das Druckausgleichselement 30 reißt entlang der Schwächungslinien 32 auf, wenn der Grenzwert des Drucks innerhalb der Batteriezelle 12 überschritten wird, wobei bis zu 95 % des vertieften, flachen Abschnitts 36 geöffnet werden und ein schneller und effektiver Druckausgleich stattfinden kann.

Vorzugsweise verläuft die Schwächungslinien 32 dabei in Draufsicht U- oder C-förmig längs des Randes des vertieften Abschnitts 36, sodass der vertiefte, flache Abschnitt 36 des Druckausgleichselements 30 zumindest an einer Stelle weiterhin fest mit dem Gehäuseboden 16 verbunden ist. Somit kann sichergestellt werden, dass das Druckausgleichselement 30 durch den hohen Druck im Inneren der Batteriezelle 12 nicht unkontrolliert wegfliegt.

Um die durchgängige Befestigung des Druckausgleichselements 30 an dem Gehäuseboden 16 an zumindest einer Stelle gewährleisten zu können, ist der Gehäuseboden 16 ein einstückiger Körper, wobei das Druckausgleichselement 30 einstückig und ungeschweißt in den angrenzenden Bereich des Gehäusebodens 16 übergeht.

Folglich wird das Druckausgleichselement 30 durch Materialabtragungen und/oder Umformen im Gehäuseboden 16 gefertigt und ist somit direkt in diesen integriert.

Eine andere Variante sieht vor, dass der Gehäuseboden 16 ohne vertieften Abschnitt 36 ausgeführt ist, so dass das Druckausgleichselement 30 nur durch die Schwächungslinie 32 definiert wird, die wie zuvor erläutert ausgebildet sein kann.

In Figur 4 ist die gesamte prismatische Batteriezelle 12 mit dem Batteriezellengehäuse 10 aufgeschnitten zu sehen. Dabei sind innerhalb des Batteriezellengehäuses 10 zumindest eine Anode 40 sowie zumindest eine Kathode 42 untergebracht.

Vorzugsweise, wie auch in Figur 4 zu sehen, sind jedoch in dem Batteriezellgehäuse Anoden- und Kathodenpakete, welche auch Zell-Stacks genannt werden, untergebracht. Die jeweiligen Zell-Stacks bestehen dabei jeweils aus mehreren Anoden 40 beziehungsweise Kathoden 42, wobei der Anodenstapel und der Kathodenstapel elektrisch zueinander isoliert sind.

## Patentansprüche

1. Batteriezellengehäuse (10) für eine prismatische Batteriezelle (12) mit einem Gehäusemantel (14) und einem als separates Teil ausgeführten, eine offene Seite des Gehäusemantels (14) schließenden Gehäuseboden (16), in welchen ein Druckausgleichselement (30) integriert ist, das durch zumindest einen Bereich definiert ist, dessen Materialdicke gegenüber einem an ihn unmittelbar angrenzenden Bereich reduziert ist, wobei der Gehäusemantel (14) und der Gehäuseboden (16) aus unterschiedlichen Materialien bestehen und sich in ihrer Wandstärke unterscheiden.

2. Batteriezellengehäuse (10) nach Anspruch 1, **dadurch gekennzeichnet, dass** das Druckausgleichselement (30) durch zumindest eine Schwächungslinie (32) definiert ist oder eine Schwächungslinie (32) aufweist.

3. Batteriezellengehäuse (10) nach Anspruch 2, **dadurch gekennzeichnet, dass** die Schwächungslinie (32) eine Nut (34) ist, insbesondere eine von der Außenseite des Batteriezellengehäuses (10) ausgehende Nut (34).

4. Batteriezellengehäuse (10) nach Anspruch 3, **dadurch gekennzeichnet, dass** die Nut (34) in den Gehäuseboden (16) eingeprägt ist.

5. Batteriezellengehäuse (10) nach einem der vorhergehenden Ansprüche, **dadurch gekennzeichnet, dass** das Druckausgleichselement (30) durch einen vertieften, flachen Abschnitt (36) im Gehäuseboden (16) definiert ist, dessen Wandstärke geringer ist als die Wandstärke des übrigen Gehäusebodens (16) außerhalb des Druckausgleichselements (30), insbesondere wobei die Wandstärke des Druckausgleichselements (30) 25 - 80 % kleiner ist als die Wandstärke des übrigen Gehäusebodens (16).

6. Batteriezellgehäuse nach einem der Ansprüche 2 bis 4 und zusätzlich nach Anspruch 5, **dadurch gekennzeichnet, dass** der das Druckausgleichselement (30) bildende vertiefte, flache Abschnitt (36) wenigstens abschnittsweise an seinem Randabschnitt (38) die Schwächungslinie (32) aufweist.

7. Batteriezellgehäuse nach Anspruch 6, **dadurch gekennzeichnet, dass** die Schwächungslinie (32) C- oder U-förmig verläuft.

8. Batteriezellengehäuse (10) nach einem der vorhergehenden Ansprüche, **dadurch gekennzeichnet, dass** der Gehäusemantel (14) ein u-förmiges Profil ist, dessen offene Seite von dem Gehäuseboden (16) verschlossen wird.

9. Batteriezellengehäuse (10) nach einem der vorhergehenden Ansprüche, **dadurch gekennzeichnet, dass** der Gehäusemantel (14) eine kleinere Wandstärke als der Gehäuseboden (16) hat, insbesondere wobei die größte Wandstärke des Gehäusebodens (16) doppelt bis viermal so groß ist wie die größte Wandstärke des Gehäusemantels (14).

10. Batteriezellengehäuse (10) nach einem der vorhergehenden Ansprüche, **dadurch gekennzeichnet, dass** das Druckausgleichselement (30) eine Fläche von 10 bis 30 % der Gesamtfläche der Außenseite des Gehäusebodens (16) einnimmt.

11. Batteriezellengehäuse (10) nach einem der vorhergehenden Ansprüchen **dadurch gekennzeichnet, dass** das Druckausgleichselement (30) dazu ausgelegt ist, einem Druck von zumindest 2 bar standzuhalten.

12. Batteriezellengehäuse (10) nach einem der vorhergehenden Ansprüche, **dadurch gekennzeichnet, dass** der Gehäuseboden (16) ein Flachprofil ist, welches an seinen entgegengesetzten Längsseiten (22) mit dem Rand (24) des Gehäusemantels (14) verbunden ist.

13. Batteriezellengehäuse (10) nach einem der vorhergehenden Ansprüche, **dadurch gekennzeichnet, dass** der Gehäuseboden (16) aus einem anderen Metall oder einer anderen Metalllegierung als der Gehäusemantel (14) besteht und diese insbesondere miteinander verschweißt sind.

14. Batteriezellengehäuse (10) nach Anspruch 12 oder 13, **dadurch gekennzeichnet, dass** der Gehäuseboden (16) am Außenrand (26) einen Absatz (28) hat, in dem der Rand (24) des Gehäusemantels (14) sitzt.

15. Batteriezellengehäuse (10) nach einem der vorhergehenden Ansprüche, **dadurch gekennzeichnet, dass** der Gehäuseboden (16) ein einstückiger Körper ist und das Druckausgleichselement (30) einstückig und ungeschweißt in den angrenzenden Bereich des Gehäusebodens (16) übergeht.

16. Batteriezelle (12) mit einem Batteriezellengehäuse (10) nach einem der vorhergehenden Ansprüche und wenigstens einer Anode (40) sowie wenigstens einer Kathode (42), welche in dem Batteriezellengehäuse (10) untergebracht sind, wobei die wenigstens eine Anode (40) und die wenigstens eine Kathode (42) elektrisch voneinander isoliert sind.
